# EUROPEAN PATENT APPLICATION

(11) **EP 0 650 243 A1**
(43) Date of publication of application: **26.04.1995**
(21) Application number: 94307612.5
(22) Date of filing: 18.10.1994
(51) Int. Cl.: H02K 11/00, H02K 5/14

(54) **Brush assembly**

(30) Priority: 22.10.1993 GB 9321784
(71) Applicant: JOHNSON ELECTRIC S.A., CH-2300 La Chaux-de-Fonds (CH)
(72) Inventor: Strobl, Georg, D-70184 Stuttgart (DE)
(74) Representative: Higgins, Michael Roger

(57) **Abstract**

A brush assembly 45 for an electric motor has a brush arm 39 with a distal end arranged for making sliding contact with a commutator, a brush holder 38 for supporting the brush arm, a motor terminal 37 and a PTC 46 for electrical protection. The brush holder 38, PTC 46 and motor terminal 37 form a stacked array within the motor held together by resilient clamping means, e.g., a resilient finger 60 or a spring clip 70.

## Description

This invention relates to a brush assembly for an electric motor and in particular to a brush assembly incorporating a positive coefficient thermistor for use in a miniature DC motor.

It is known to protect motors from overcurrent and/or overtemperature by means of switching devices, either mechanical switches, for example, bimetal switches, or solid state switches such as positive temperature coefficient devices (PTCs) and in particular, positive coefficient thermistors of either the ceramic or polymer type.

The use of PTCs as thermal switches or current switches in low voltage and extra low voltage DC motors is well known. The rapid rise in resistance at its operating temperature, its self-heating and self-resetting qualities make it ideal. Although these devices can be mounted outside the motor, modern designs require the outside of the motor to be free of unnecessary obstructions. Therefore, PTCs are generally mounted within the motor, preferably in the end cap electrically between a motor terminal and a brush although they may be mounted on the rotor or elsewhere. As the size of the motor decreases, the positioning of the PTC becomes more critical, leading to the various designs, see for example, GB 2222730A, GB 2244868A and EP 0453575A.

EP 0453575 describes the use of a resin type PTC thermistor in a small DC-motor in which the PTC is connected in series with the armature winding. Various embodiments are shown including an embodiment in which the PTC is located between a terminal and a brush arm of the motor. The PTC appears to be fixed to the terminal and brush arm by an electrically conductive adhesive resin.

It is desirable to avoid the use of conductive adhesives within a miniature motor end cap due to cost, resistance level of the adhesive and the time taken during assembly to apply the adhesive and for the adhesive to set. Also, it is desirable to avoid the use of any adhesives in a miniature motor end cap to avoid possible contamination of other parts which may occur while handling the end cap before the adhesive sets.

The use of slots in the end cap for wedging the PTC in between the terminal and the brush arm to form an electrical connection is not satisfactory for production as the PTCs and in particular, resin based PTCs, do not have an accurate or consistent thickness. Therefore, although the slot can be formed in the plastics material end cap precisely and the thickness of terminal and brush arm can be precisely controlled, the thickness of the combined stack of terminal, PTC and brush arm is not accurate or consistent, resulting in variations from being so loose that the PTC falls out or at least, fails to make proper electrical contact between the terminal and brush arm, to being so tight that the PTC is crushed, resulting in erratic, unpredictable or unacceptable operating characteristics of the PTC.

It is the purpose of the present invention to provide a simple alternate method of protecting a motor by a PTC or at least to provide the public with a useful choice.

This is achieved by providing a brush assembly in which the brush holder, the motor terminal and the PTC form, at least, part of a stacked array held together by resilient clamping means.

Accordingly, the present invention provides a brush assembly for an electric motor comprising a brush arm having a distal end arranged to make sliding contact with a commutator; a brush holder supporting the brush arm, a motor terminal and a PTC arranged to electrically connect the motor terminal to the brush holder, wherein the brush holder, the motor terminal and the PTC form, at least, part of a stacked array held together by resilient clamping means.

The distal end of the brush arm may be fitted with a brush which in use contacts the commutator or the distal end may contact the commutator directly. In the latter case, the distal end may be shaped or coated to provide commutator contact portions or the end may be split to form a plurality of fingers, each having commutator contact portions, as is known.

The brush holder may be formed integrally with the brush arm but it is more common for the brush arm to be elongate with the brush holder being connected to the proximal end of the brush arm by welding or upset rivets.

Preferably, the resilient clamping means comprises a resilient finger formed integral with an end cap to which the brush assembly is fitted and co-operating with a recess formed in the end cap in which the stacked array is disposed to clamp the stacked array between the finger and a wall of the recess.

In addition, a lip may be formed adjacent the free end of the finger, the lip being arranged to catch at least a portion of the stacked array to restrict withdrawal of the stacked array from the recess.

Alternatively, the resilient clamping means may be a spring clip, which may or may not be electrically conductive. Where the spring clip is non-conductive, it may bear directly on the terminal and a brush holder to clamp the PTC between and in electrical contact with the terminal and the brush holder.

Where the spring clip is electrically conductive, the stacked array may include an insulating member and the spring clip bears on the insulating member and on either the terminal or the brush holder to clamp the stacked array together with the PTC disposed between and in electrical contact with the terminal and the brush holder.

Alternatively, the spring clip may be formed integrally with either the terminal or the brush holder and bears directly on either the insulating member or the PTC to clamp the stacked array together with the PTC electrically connecting the terminal with the brush holder.

Preferably, the insulating member is a wall formed on the inside of an end cap to which the brush assembly is fitted, the wall being arranged to precisely locate at least one of the terminal and the brush holder within the end cap.

The resilience of the clamping means easily accommodates the large tolerance in the thickness of the PTC, at the same time, ensuring adequate contact pressure is maintained between the PTC and the motor terminal and brush holder. The use of a wall formed on the end cap with the motor terminal and the brush holder being located on opposite sides of the wall ensures that the terminal and brush holder are precisely located within the end cap regardless of the variations in the thickness of the PTC. The motor terminal may need to be precisely located to ensure correct mating with the appliance in which it is to be fitted while the brush holder needs to be precisely located within the end cap to ensure that it contacts the commutator at the correct location to ensure proper commutation.

In certain circumstances, it may be advantageous to solder the PTC to either the motor terminal or to the brush holder. This not only provides added security for very high vibration or robust applications but during production, the PTC may be soldered to the other part prior to being brought to the assembly line to reduce the number of separate items being inserted into the end cap on the assembly line.

For applications involving high vibration or potentially high corrosion, it may be desired to tin or coat with solder, the areas of the terminal, brush holder and clip where they make contact with each other and/or the PTC. The PTC usually would have a surface coating of nickel on its terminals and this usually provides adequate corrosion protection.

The present invention also provides a miniature electric motor incorporating a brush assembly as described above.

Preferred embodiments of the invention will now be described, by way of example only, with reference to the accompanying drawings, in which:
Figure 1 is an exploded pictorial view of a miniature PMDC motor to which the present invention is applicable;
Figure 2 illustrates a motor end cap fitted with a brush assembly according to the present invention;
Figure 3 is a part sectional view along line III - III of Figure 2, illustrating the connection between the brush assembly and the end cap;
Figure 4 is an exploded pictorial representation of the brush assembly of Figure 2;
Figure 5 depicts a detailed sectional view of a further embodiment in which the brush assembly incorporates a non-conductive clip;
Figure 6 is a similar view to Figure 5, of an embodiment in which the brush assembly incorporates an electrically conductive clip;
Figure 7 is a similar view to Figure 6 in which the conductive clip is formed as part of the motor terminal;
Figure 8 is a similar view to Figure 6 in which the conductive clip is formed as part of the brush holder; and
Figure 9 is a similar view to Figure 7 wherein the motor terminal is configured as a female terminal.

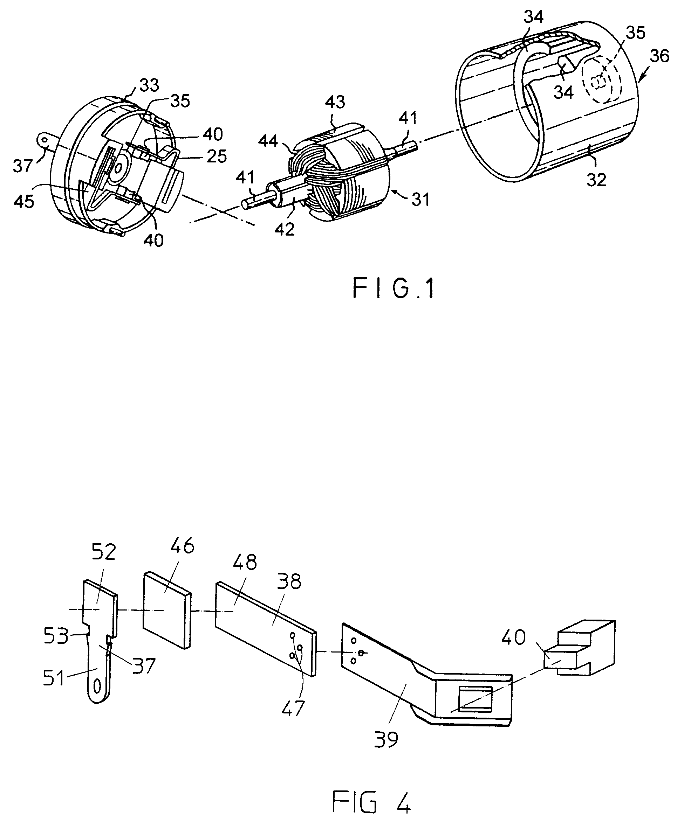

Figure 1 illustrates a miniature electric motor of the permanent magnet direct current type. The motor has a rotor 31 and a deep drawn can-like casing 32 closed by a plastics material end cap 33. The casing carries permanent magnets 34 forming the stator, and a bearing 35 in the end wall 36. The end cap carries a bearing 35 and two brush assemblies 25, 45 each including a motor terminal 37 (only one shown), a brush holder 38, a brush leaf 39 and a carbon brush 40. The rotor comprises a shaft 41 journalled in the bearings 35 and having a commutator 42 and a wound armature 43 mounted on the shaft. The armature 43 comprises a stack of steel laminations having arms about which rotor windings 44 are wound. The windings 44 are connected to the commutator 42. Electrical power is transferred between the motor terminals 37 and the rotor windings 44 via the brush assemblies in contact with the commutator 42.

Normally, the brush assemblies would be identical and it is usual for the motor terminals 37 to be an integral part of the brush assembly. Brush assemblies usually have a brush leaf or brush arm 39 made from a conductive resilient material such as beryllium copper. A brush holder 38 is fixed to one end of the brush arm to support the brush arm. The brush holder 38 is made from a more rigid material such as brass. The brush assemblies also include a commutator contact portion which may be a carbon brush 40 or similar fitted to the distal end of the brush arm or it may be simply a portion of the brush arm which is adapted to directly contact the commutator 42.

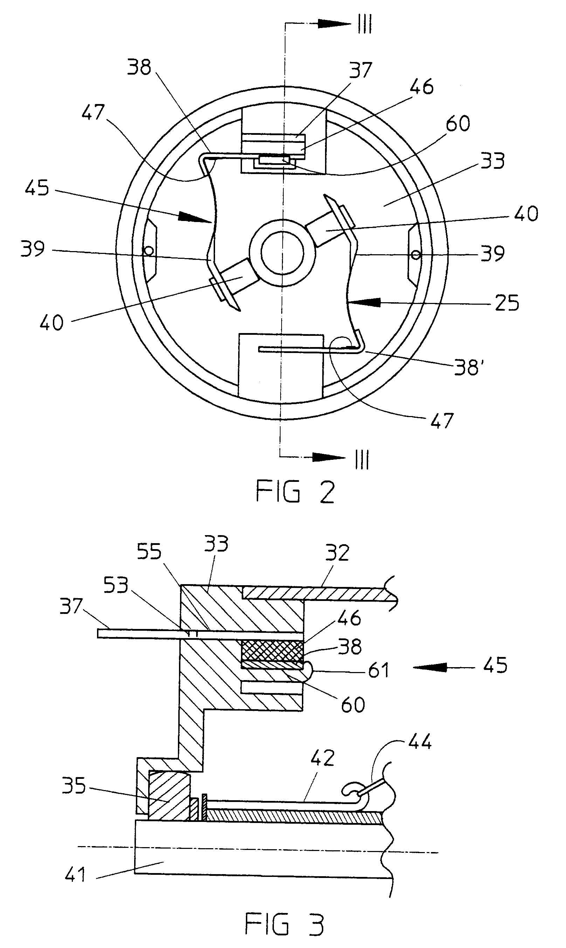

The construction thus far described is well known in the art. However, the end cap of the motor of Figure 1 has one standard brush assembly 25 and one brush assembly incorporating a PTC. The PTC brush assembly (45) is shown, for illustrative purposes only to be similar to that shown in Figures 2 and 3 but may take the form of any of the described embodiments.

Figures 2 and 3 illustrate one arrangement for fitting the brush assembly 45 to the motor and in particular to the inside surface of the end cap 33. Figure 2 shows the inside surface of the end cap while Figure 3 is a partial section view taken along line III - III of Figure 2, showing how the brush assembly is seated in the end cap. Part of the motor casing 32 and part of the commutator 42 are shown for ease of explanation.

The end cap of Figure 2 is fitted with two brush assemblies. One, 25, is a standard brush assembly and the other, 45, is a brush assembly according to the present invention. Brush assembly 45 incorporates a positive temperature coefficient element 46 such as a positive coefficient thermistor or similar device and is generally referred to as PTC. The preferred element is a conductive polymer, positive temperature coefficient resistor marketed by Raychem Corporation under the trade name POLYSWITCH circuit protector.

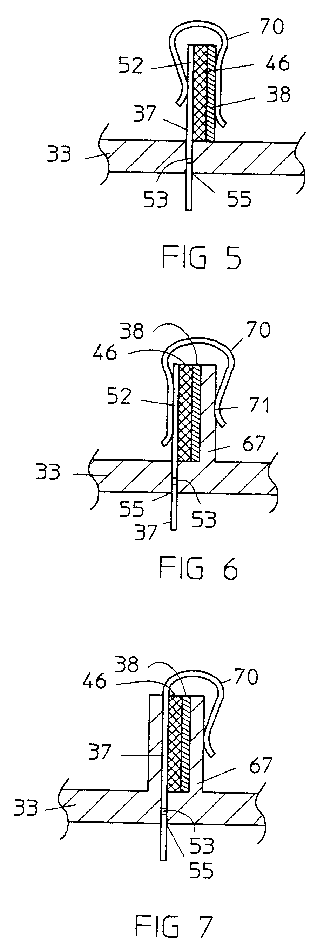

The brush assembly 45 is more clearly shown in Figure 4 where it is shown exploded for clarity. The brush assembly comprises a motor terminal 37, a brush holder 38, a brush arm 39 and the PTC 46. The motor terminal 37 illustrated is a male terminal having an elongate terminal portion 51 extending from a contact portion 52. The terminal portion is designed to contact an external source of electrical power. Barbs 53 are formed on the terminal portion for holding the terminal 37 in the end cap 33.

The brush holder 38 provides a rigid support or base for the brush arm 39 and is usually of brass or similar material. The brush holder has a contact portion 48 similar to the contact portion 52 of the terminal, for making contact with the PTC 46. The brush arm 39 is a strip of beryllium copper and has a carbon brush 40 fitted in the usual manner to its distal end. The proximal end of the brush arm is fixed to the brush holder 38 by upset rivets, spot welding or similar procedure. Upset rivets 47 are illustrated for example purposes.

The PTC 46 is thus physically and electrically located between the terminal 37 and the brush holder 38 to form a stacked array. The array is held together by resilient clamping means to maintain the integrity of the array and contact between the various parts. Also, the PTC may be permanently attached to either the motor terminal or the brush holder by soldering, laser welding or the like, to reduce the number of separate items to be assembled on the assembly line. The PTC could be attached to the brush holder at the time the brush arm is secured to the brush holder or attached to the motor terminal at the time it is formed at a location remote from the end cap assembly line.

Returning to Figure 3, it can be seen that the brush assembly is inserted into the end cap from the inside. The brush assembly is located within a recess 54 formed in the end cap. The terminal portion 51 of the terminal 37 passes through a terminal hole 55 in the end cap 33 to be externally accessible. The barbs 53 bite into the end walls of the terminal hole 55 to resist withdrawal of the terminal. The contact portion 52 is wider than the terminal hole 55 and prevents the terminal 37 from being pulled all the way through the holder, thereby securing the terminal 37 in place.

The PTC 46 is sandwiched between the contact portions 48, 52 of the terminal and the brush holder to establish electrical contact between the terminal and the brush holder in the PTC. The PTC 46 may be permanently attached to either the terminal or the brush holder as previously mentioned.

A resilient finger 60 is formed integral with the end cap 33 and forms part of a wall of the recess 54. Finger 60 is arranged to bear against the brush holder 38 to clamp the brush assembly against the opposite wall of the recess 54, thus bringing the parts of the array into electrical contact. The finger is resiliently deformed as the brush assembly is inserted into the recess. The resiliency of the finger readily accommodates the variations in the thickness of the stack due to the inclusion of the PTC. The finger 60 is provided with a hook 61 at its outer end. The hook extends over the outer edge of at least the brush holder to form a latch to prevent axial removal of the brush holder from the recess.

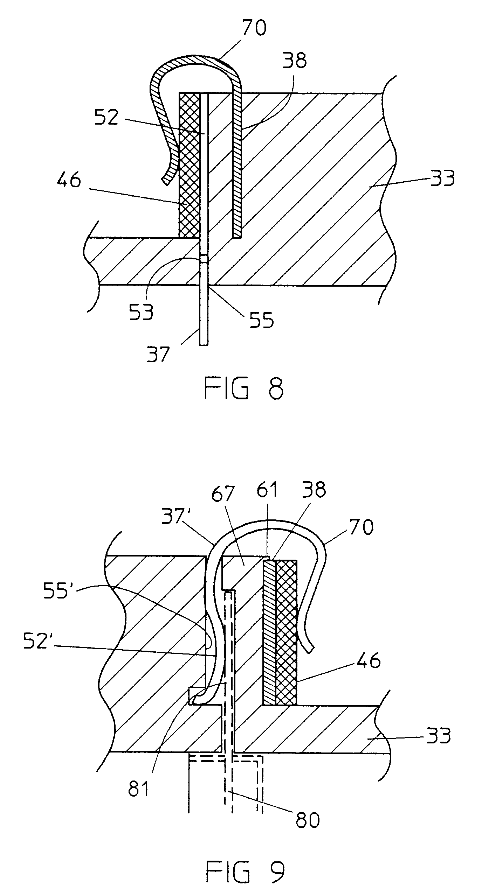

Figures 5 to 9 illustrate an alternative clamping arrangement in which a spring clip 70 or similar type of fastener urges the terminal 37 towards the brush holder 38 while electrically connecting the PTC in between. In Figure 5, a non-conductive clip is shown whereas in Figure 6, the clip may be conductive. In Figures 7, 8 and 9, the clip is formed as an integral part of either the terminal or brush holder and in Figures 8 and 9, forms an essential part of the electrical connection between the terminal and the brush holder.

In Figure 5, the stacked array of terminal 37, PTC 46 and brush holder 38 is held together by a spring clip 70. The terminal is fitted to the end cap 33 in a manner similar to that previously described. The spring clip is non-conductive, otherwise it would require some form of insulation to prevent short circuiting the PTC 46.

In Figure 6, the clip 70 may be conductive as an insulating member in the form of a wall 67 formed integrally with the end cap 33 forms part of the stacked array and insulates the clip from the brush holder. The wall 67 also provides a convenient means for precisely locating the brush holder within the end cap A notch 71 may be formed in the wall to locate the clip 70.

Figure 7 shows a similar arrangement to that of Figure 6 except the spring clip is formed integral with the motor terminal, whereby insertion of the terminal also inserts the clip and the barbs 53 which prevent the terminal 37 from being withdrawn, also secure the clip 70.

Figure 8 is a corresponding arrangement to that of Figure 7 in which the spring clip 70 is formed integral with the brush holder 38. Also, the clip bears directly onto the PTC 46 instead of the insulating member 67. Thus, the clip forms an essential part of the current path between the terminal and the brush holder. An advantage of this arrangement is that the terminal and brush holder are separated by and in direct contact with the wall 67 and thus, can be precisely located within the end cap regardless of variations in the thickness of the PTC 46. Of course, this arrangement may be used with a separate clip or with the clip formed integral with the terminal.

Figure 9 illustrates an embodiment in which the motor terminal 37' is of the female type. A male supply terminal 80 is shown in phantom inserted into the end cap 33 to illustrate the interaction between the motor terminal 37' and the supply terminal 80. Again, the clip 70 is formed integral with the terminal 37' and bears directly onto the PTC 46. The urging of the spring causes the PTC to bear against the brush holder. The brush holder 38 is precisely located in the end cap 33 by use of the insulating wall 67. Wall 67 also forms one side of a channel 81 for the supply terminal 80. The motor terminal 37' has a contact portion 52' which is disposed so that it is resiliently displaced laterally as the supply terminal 80 is inserted and thus bears against the supply terminal 80 to make electrical contact therewith.

While brush arms with brushes have been shown in the examples, it should be realised that the invention is equally applicable to brush assemblies which use wipers or portions of the brush arm adapted to make direct sliding contact with the commutator, including multiple finger leaf brush arrangements. Also, while male terminals have been shown predominantly, the arrangements are equally applicable to female terminals as illustrated by the inclusion of Figure 9.

## Claims

1. A brush assembly for an electric motor, comprising:
a brush arm (39) having a distal end arranged to make sliding contact with a commutator (42);
a brush holder (38) for supporting the brush arm (39);
a motor terminal (37); and
a positive temperature coefficient element (PTC) (46) arranged to electrically connect the motor terminal (37) to the brush holder (38), characterised in that the brush holder (38), the motor terminal (37) and the PTC (46) form, at least; part of a stacked array held together by resilient clamping means (60, 70).

2. A brush assembly as defined in Claim 1, wherein the resilient clamping means comprises a resilient finger (60) formed integral with an end cap (33) to which the brush assembly is fitted and co-operating with a recess (54) formed in the end cap (33) in which the stacked array is disposed to clamp the stacked array between the finger (60) and a wall of the recess (54).

3. A brush assembly as defined in Claim 2, wherein a lip (61) is formed adjacent the free end of the finger (60), the lip (61) being arranged to catch at least a portion of the stacked array to restrict withdrawal of the stacked array from the recess (54).

4. A brush assembly as defined in Claim 1, wherein the resilient clamping means is a spring clip (70).

5. A brush assembly as defined in Claim 4, wherein the spring clip (70) is electrically non-conductive and bears directly on the terminal (37) and the brush holder (38) to clamp the PTC between and in electrical contact with the terminal (37) and the brush holder (38).

6. A brush assembly as defined in Claim 4, wherein the stacked array includes an insulating member (67) and the spring clip (70) bears on the insulating member (67) and one of the terminal (37) and the brush holder (38) to clamp the stacked array together with the PTC (46) disposed between and in electrical contact with the terminal (37) and the brush holder (38).

7. A brush assembly as defined in Claim 4, wherein the stacked array includes an insulating member (67) and the spring clip (70) is formed integrally with one of the terminal (67) and the brush holder (38) and bears directly on one of the insulating member (67) and the PTC (46) to clamp the stacked array together with the PTC (46) electrically connecting the terminal (37) with the brush holder (38).

8. A brush assembly as defined in Claim 6 or 7, wherein the insulating member (67) is a wall formed on an end cap (33) to which the brush assembly is fitted, the wall being arranged to precisely locate at least one of the terminal (37) and the brush holder (38) within the end cap (33).

9. A brush assembly as defined in any one of the preceding claims, wherein the PTC (46) is soldered to one of the motor terminal (37) and the brush holder (38).

10. A miniature PMDC motor comprising:
a wound rotor (31) with a commutator (42),
a can like housing (32) with an open end and a closed end,
a permanent magnet stator (34) disposed within the housing,
an end cap (33) closing the open end of the housing,
bearings (35) supported by the closed end (36) of the housing and the end cap (33) for rotatably mounting the rotor (31) within the housing,
first and second brush assemblies (45, 25) mounted on the end cap (33) for supplying electrical power to the wound rotor (31) via the commutator (42), each brush assembly comprising a motor terminal (37), a brush holder (38), a brush arm (39) and a carbon brush (40) fitted to the brush arm (39) and adapted for sliding contact with the commutator (42), the first brush assembly (45) further comprising a PTC (46) electrically disposed between the motor terminal (37) and the brush holder (38), and characterised by a spring clip (70) formed integral with the brush holder (38) and bears against the PTC (46) to urge the PTC (46) towards the brush holder (38) and clamps the PTC against the motor terminal (37) while clamping the motor terminal (37) and brush holder (38) on either side of an insulating wall (67) formed integral with the end cap (33) to precisely locate the brush holder (38) and motor terminal (37) with respect to the end cap (33).

11. A brush assembly as defined in Claim 10, wherein the PTC (46) is soldered to the motor terminal (37).
